# EUROPEAN PATENT APPLICATION

(11) **EP 0 644 017 A1**
(43) Date of publication of application: **22.03.1995**
(21) Application number: 94306739.7
(22) Date of filing: 14.09.1994
(51) Int. Cl.: B23P 19/00, B23Q 7/10

(54) **Separator/feeder for headed fastener**

(30) Priority: 16.09.1993 JP 50304/93
(71) Applicant: EMHART INC., Newark, Delaware 19711 (US)
(72) Inventor: Sakota, Kanji, Toyohashi-shi Aichi-ken (JP)
(74) Representative: Randall, John Walter

(57) **Abstract**

A separator/feeder 1 comprises a chute 18 for arranging a plurality of headed fasteners 4 in line, storing and feeding them, a shuttle 20 having a hollow for storing, a body 22 which supports the shuttle while allowing it to reciprocate and is attached with the chute, a piston-cylinder device 24 to reciprocate the shuttle between a first position of the body where headed fasteners are received in the storing hollow and a second position where headed fasteners are brought out to a discharge port, and a tube 25 to feed headed fasteners, their shanks first. A rotatable disc 27 provided in the body 22 sends headed fasteners standing upside-down into the storing hollow of the shuttle. A rack 32 and a pinion 30 function to link the rotation of the disc with the reciprocating movement of the shuttle so that headed fasteners can be received from a pocket 28 of the disc when the storing hollow of the shuttle is in the first position and headed fasteners can be received from the chute 18 into the disc pocket when the storing hollow of the shuttle is in the second position. The discharge port 23 for the fasteners faces toward the top surface of the body and the tube 25 for feeding fasteners extends beyond the top surface of the body.

## Description

The present invention relates to a headed fastener separator/feeder for separating and feeding headed fasteners fed in a row from a chute one by one.

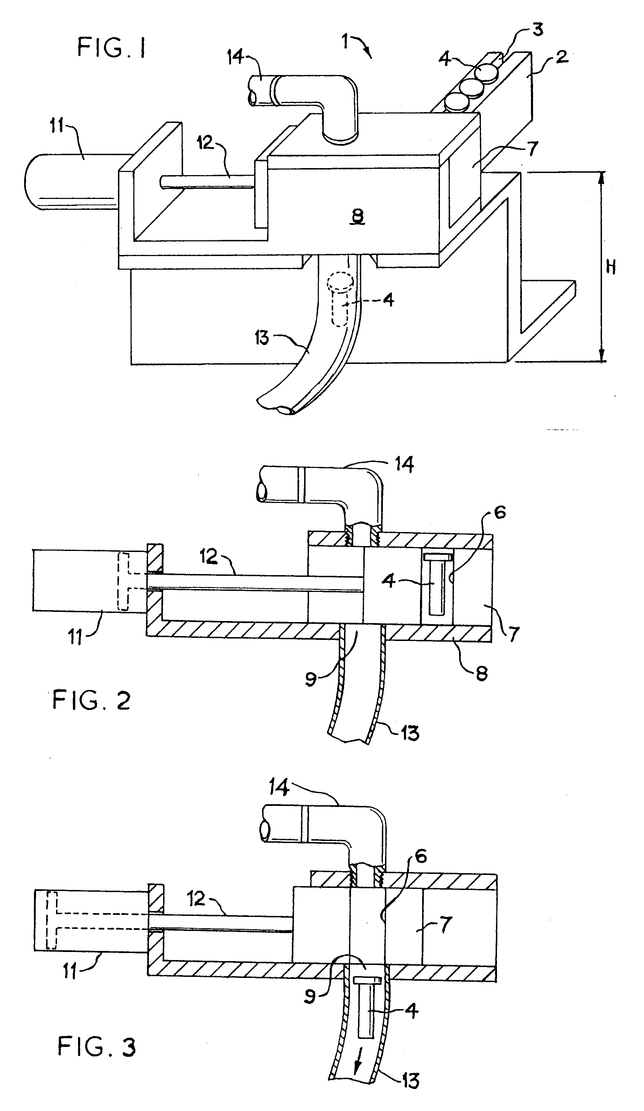

There is known a headed fastener separator/feeder for separating screws, T-studs or the like fed in a row from a chute one by one and feeding them to a pneumatic screw driver or a stud welder. A previously known headed fastener separator/feeder is described with reference to Figures 1 to 3. A separator/feeder 1 for T-studs or other headed fasteners has a chute 2. The chute 2 stores a plurality of T-studs 4 standing in a row so that their shanks are received in a groove 3 with the heads positioned above the groove to send them toward an outlet. The feeder/separator 1 is provided with a shuttle 7 having a storing cavity 6 (Figures 2 and 3) to receive a single T-stud 4 from the chute 2. The shuttle 7 is supported by a body 8 in a manner that is reciprocated. The body 8 is provided with an outlet of the chute 2 to receive T-studs 4. On the body 8, a piston-cylinder device 11 is mounted to reciprocate the shuttle 7 between a first position in the body in which the storing cavity 6 receives a T-stud 4 from the chute 2 (Figure 2) and a second position in the body in which the storing cavity 6 is positioned at a discharge port 9 for T-studs 4. A piston rod 12 of the piston-cylinder device 11 is connected to the shuttle 7 to move reciprocatingly the shuttle 7 between the first position of Figure 2 and the second position of Figure 3. To the discharge port 9 of the body 8, a tube 13 is connected to feed T-studs 4 to a stud welder or the like with their heads being ahead. For feeding T-studs, the top surface of the body opposite to the discharge port 9 is provided with an air pipe 14 to supply pressurised air. When the separator/feeder 1 constructed as described above is at the first position of Figure 2 a single T-stud 4 is stored in the storing cavity 6 of the shuttle 7. Then, the shuttle 7 is moved to the second position of Figure 3 by the piston-cylinder device 11 and the T-stud 4 is fed into the tube 13 with its shank being ahead. The T-studs 4 are fed one by one to a stud welder or the like by reciprocating the shuttle 7.

The known separator/feeder described above separates the headed fasteners one by one by reciprocating the shuttle with the shank being always ahead. Since this is suitable for automatic feeding to a stud welder, a pneumatic screw driver or the like, the separator/feeder is widely in use. In this known separator/feeder, the headed fasteners are fed through the tube extending to the lower portion of the separator/feeder body. Therefore, in an already limited space below the body, a further space for changing the direction of the tube is necessary. To this end, as shown in Figure 1, the space of height H has to be made under the body. Further, the tube can be taken out only in limited directions.

Accordingly, the present invention aims to provide a headed fastener separator/feeder in which the tube can be drawn round easily for feeding of the tube, and directional limitation for taking the tube out is minimised.

In order to achieve the above-described object, according to the present invention, there is provided a separator/feeder for headed fasteners comprising a chute for receiving a plurality of headed fasteners arranged in a line with their shanks received in a groove and their heads being above the groove and for feeding the fasteners toward an outlet, a shuttle having a storing cavity to receive a single headed fastener, a body for reciprocatingly supporting the shuttle and supporting the chute to receive the headed fasteners, means attached to the body for reciprocating the shuttle between a first position in the body in which the storing cavity receives a headed fastener from the chute and a second position in the body in which the storing cavity is positioned at a discharge port for the headed fastener, and a tube attached to the discharge port to feed headed fasteners with their shanks being ahead, characterised in that a rotatable disc is positioned in the body to pass between the outlet of the chute and the first position in which the headed fastener is received in the storing cavity of the shuttle under the disc, the disc being provided with a pocket formed on its periphery to store the headed fastener so the disc turns over the headed fastener received from the chute to an upset orientation at the first position, and the rotation of the disc is associated with reciprocating movement of the shuttle so that the storing cavity of the shuttle receives the headed fastener from the pocket when the storing cavity is at the first position and the disc receives a headed fastener from the chute into the pocket when then storing cavity is at the second position, and further the fastener discharge port of the body is directed toward the top surface of the body.

The invention will now be described, by way of example only, with reference to the accompanying drawings, in which
Figure 1 is a perspective view of a conventional separator/feeder;
Figure 2 shows a shuttle of the separator/feeder of Figure 1 at a first position;
Figure 3 shows the shuttle of the separator/feeder of Figure 1 at a second position;
Figure 4 is a perspective view of a separator/feeder according to the present invention;
Figure 5 is a cross-sectional view showing an internal structure of the separator/feeder of Figure 4;
Figure 6 shows a T-stud received by a disc while a shuttle is at the second position in the separator/feeder according to the present invention; and
Figure 7 shows the shuttle at the first position so that a T-stud is received by the shuttle from the disc in the separator/feeder according to the present invention.

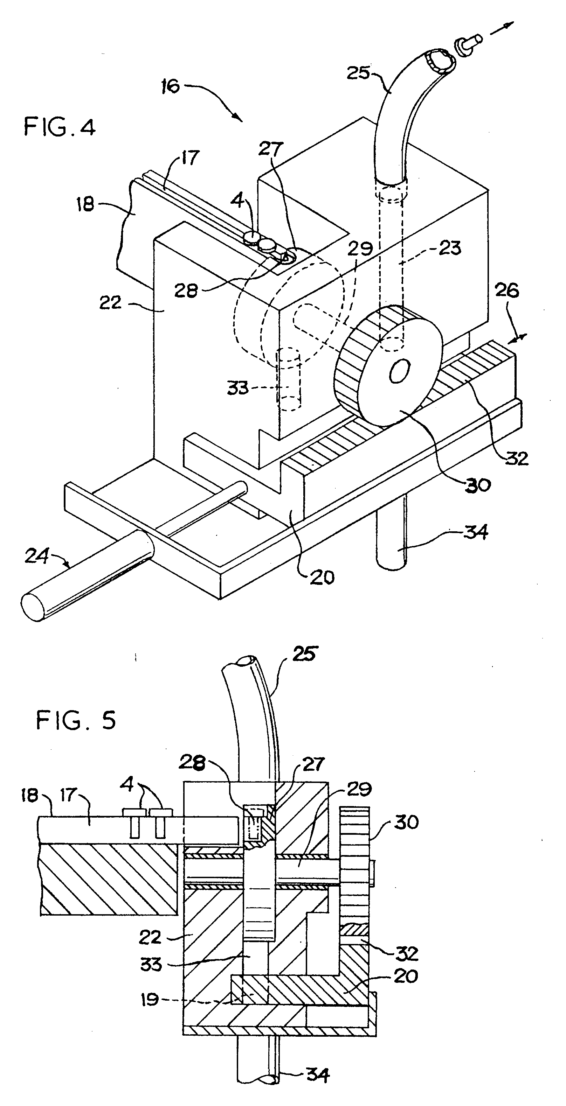

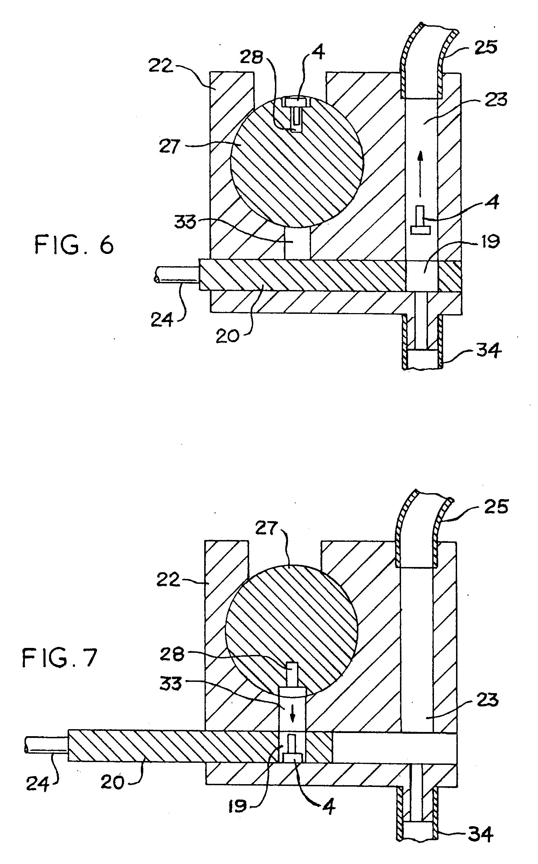

As in the publicly known separator/feeder 1 (Figures 1 to 3), a separator/feeder 16 according to the present invention comprises a chute 18 to receive a plurality of T-studs 4 or other headed fasteners arranged in a line with their shanks received in a groove 16 and their heads being above the groove to send them toward an outlet; a shuttle 20 having a storing cavity 19 (Figures 6 and 7) to store a single T-stud 4; a body 22 to reciprocatingly support the shuttle 20 and attached to the chute 18 to receive T-studs; a piston-cylinder device 24 attached to the body 22 to reciprocate the shuttle 20 between a first position (Figure 7) in which the storing cavity 19 receives a T-stud from the chute 18 and a second position (Figure 6) in which the storing cavity 19 is positioned at a discharge port 23 for the T-studs 4; and a tube 25 attached to the discharge port 23 to feed T-studs with their shanks being ahead. The shuttle 20 is reciprocated by the piston-cylinder device 24 as indicated by an arrow 26 in Figure 4 and moves reciprocatingly between the first position shown in Figure 7 and the second position shown in Figure 6.

In the separator/feeder 16 of the present invention, in addition to the above structure, the body 22 is provided with a disc 27 which rotates to pass along the outlet of the chute 18 and the first position (Figure 7) in which a T-stud is received in the storing cavity 19 of the shuttle under the chute. As illustrated, the disc 27 is formed in a circular plate and with a pocket 28 on its periphery to receive a T-stud 4. The disc 27 is held rotatably to the body 22 by means of a horizontal shaft 29. The disc is rotated while it keeps a T-stud 4 received from the chute 18 in the pocket 28 and turns the T-stud 4 upside-down or upset at the first position. On the opposite end of the shaft 29, a pinion 30 is mounted. The gear of the pinion 30 is in mesh with the gear of a rack 32 formed on the shuttle 20 so that the reciprocating movement of the shuttle 20 is associated with the rotation of the disc 27. By means of the gears of the pinion 30 and the rack 32, the disc 27 is rotated so that when the storing cavity 19 of the shuttle 20 is at the fist position of Figure 7, the T-stud drops from the pocket 28 through a passage 33 of the body into the storing cavity 19 for storage and when the storing cavity 19 is at the second position of Figure 6, a T-stud 4 from the chute 18 is received in the pocket 28.

The separator/feeder 16 constructed as stated above receives a single T-stud 4 in the pocket 28 of the disc 27 at the second position of Figure 6. Next, the shuttle 20 is moved to the first position of Figure 7 by the piston-cylinder device 24, and then the pinion 30 in engagement with the rack 32 of the shuttle 20 rotates to have the disc 27 rotate through 180 degrees as shown in Figure 7. With this rotation, the T-stud 4 is turned over (upset) and the upset T-stud passes through the passage 33 of the body to be stored in the storing cavity 19. Thereafter, the shuttle 20 is moved again to the second position of Figure 6 by the piston-cylinder device 24 and the T-stud 4 is transferred to the discharge port 23 for feeding purposes. At the same time, the disc 27 is rotated through 180 degrees by the rack 32 and the pinion 30 to have the pocket 28 receive the next T-stud 4. As this operation is repeated, T-studs 4 are fed to a stud welder or the like through the tube 25 one by one with their shanks being ahead.

In the present invention, the discharge port 23 of the body 22 for T-studs 4 conveniently faces toward the top surface of the body 22. As the T-stud 4 is turned upside-down by the disc 27, the stud is fed in a tube 25 with such an orientation that the shank of the stud is ahead even when they are discharged to above the body 22. Accordingly, the tube 25 extends from the top surface of the body 22 to a stud welder or the like. An air pipe 34 extends from the lower portion of the discharge port 23 to supply pressurised air to the tube 25. Since the tube 25 is allowed to extend to the top surface as mentioned above, unlike the previously known separator/feeder shown in Figure 1, there is no need to make a space of a height H which must be made below the body. As the air pipe 34 lets air go therethrough, it can be bent freely and a small space is sufficient for it.

According to the present invention, the rotatable disc in the body transfers the headed fasteners to the storing cavity of the shuttle with turned-over orientation and the rotation of the disc is linked to the reciprocating movement of the shuttle so that the storing cavity of the shuttle receives a headed fastener from the pocket of the disc when the storing cavity is at the first position and the headed fastener from the chute is received in the disc pocket when the storing cavity is at the second position. This arrangement allows the headed fastener discharge port of the body to face toward the top surface of the body, so that the fastener feeding tube extends into an ample space above the top surface of the body. Therefore, the fastener feeding tube can be drawn round easily and directional limitation for taking the tube out can be minimised.

## Claims

**1** A separator/feeder for headed fasteners (4) comprising a chute (18) for receiving a plurality of headed fasteners arranged in a line with their shanks received in a groove (17) and their heads being above the groove and for feeding the fasteners toward an outlet, a shuttle (20) having a storing cavity (19) to receive a single headed fastener, a body (22) for reciprocatingly supporting the shuttle (20) and supporting the chute (18) to receive the headed fasteners (4), means attached to the body for reciprocating the shuttle (20) between a first position in the body (22) in which the storing cavity (19) receives a headed fastener from the chute and a second position in the body in which the storing cavity is positioned at a discharge port (23) for the headed fastener, and a tube attached to the discharge port to feed headed fasteners with their shanks being ahead, characterised in that a rotatable disc (27) is positioned in the body to pass between the outlet of the chute and the first position in which the headed fastener is received in the storing cavity of the shuttle under the disc, the disc being provided with a pocket (28) formed on the periphery of the disc to store the headed fastener so that the disc (27) turns over the headed fastener (4) received from the chute (18) to an upset orientation at the first position, and the rotation of the disc is associated with reciprocating movement of the shuttle so that the storing cavity of the shuttle receives the headed fastener from the pocket when the storing cavity (19) is at the first position and the disc receives a headed fastener from the chute into the pocket when the storing cavity is at the second position, and further the fastener discharge port (23) of the body is directed toward the top surface of the body.
